# EUROPÄISCHE PATENTSCHRIFT

(11) **EP 2 067 906 B1**
(45) Veröffentlichungstag und Bekanntmachung des Hinweises auf die Patenterteilung: **17.04.2013**
(21) Anmeldenummer: 08105891.9
(22) Anmeldetag: 28.11.2008
(51) Int. Cl.: E04B 2/76, F16B 2/06, E04B 1/58

(54) **Verbindungssystem für rinnenförmige Profilstäbe und Verbindungsanordnung**
Connection system for trough shaped profile bars and connection arrangement
Système de connexion pour tiges de profil en forme de cannelure et agencement de connexion

(30) Priorität: 03.12.2007 DE 202007016892 U
(43) Veröffentlichungstag der Anmeldung: 10.06.2009
(73) Patentinhaber: VIEGA GmbH & Co. KG, 57439 Attendorn (DE)
(72) Erfinder: Droste, Stefan, 57439 Attendorn (DE); Wessel, Heinz-Werner, 58840 Plettenberg (DE); Manegold, Christoph, 46242 Bottrop (DE)
(74) Vertreter: Cohausz & Florack

(56) Entgegenhaltungen:
- EP-A2- 1 441 081
- DE-A1-102004 040 589
- DE-U1- 29 722 177

## Beschreibung

Die Erfindung betrifft ein Verbindungssystem für rinnenförmige Profilstäbe, insbesondere zur Bildung von Sanitärinstallationen, mit einem Verbinder, der zwei einander gegenüberliegende Platten aufweist, die durch mindestens ein Befestigungsmittel und ein Zwischenstück miteinander verbunden sind und klemmend an einem rinnenförmigen Profilstab befestigbar sind, wobei an äußeren Kanten der Platten Vorsprünge ausgebildet sind, die in Eingriff mit an den Profilstäben ausgebildeten Nuten bringbar sind, und mit mindestens einem Abstandshalter zur Anordnung in dem jeweiligen rinnenförmigen Profilstab, an dessen offener Seite der Verbinder klemmend befestigt werden kann. Ferner betrifft die Erfindung eine Verbindungsanordnung mit einem solchen Verbindungssystem.

Aus der DE 100 60 597 A1 ist ein Verbinder für Profilstäbe bekannt, der zwei Platten aufweist, die mit einer Schraube lösbar an wenigstens einem Profilstab befestigbar sind und dabei jeweils mit geneigten Spannflächen in Nuten von einem oder mehreren Profilstäben einfassen. Die beiden Platten des Verbinders sind von einer Feder auf einen bestimmten Abstand zueinander gehalten, so dass die Platten elastisch federnd in die Nuten der Profilstäbe einschnappbar sind.

Bei diesem bekannten Verbinder besteht der Nachteil, dass er sich nur an geschlossenen Profilstäben, die eine innere Hohlkammer besitzen, einsetzen lässt. Solche geschlossenen Profile lassen sich ohne Kern in einer Stanze oder Pressmaschine nur schlecht ablängen. Da die Profilstäbe in der Länge meist mehrere Meter lang sind, ist es nicht möglich, einen entsprechenden Kern von mehreren Metern in den Profilstab einzuschieben. Deshalb müssen geschlossene Profilstäbe aufwendig mittels einer Säge gekürzt werden, um eine Deformierung des Profilstabes im Bereich der Trennstelle zu vermeiden.

Für das Ablängen von Profilstäben ist es ferner bekannt, offene Profilstäbe vorzusehen, die an einer Seite zur Einführung eines Kerns geöffnet sind. Solche Profilstäbe, die auch als C-förmige Profile oder rinnenförmige Profilschienen bezeichnet werden, können dann entsprechend fixiert und abgelängt werden. Zusätzlich können auch erforderliche Bohrungen und Ausstanzungen vorgesehen werden. An der offenen Seite können diese Profilstäbe (Profilschienen) jedoch nicht mit einem Verbinder der aus der DE 100 60 597 A1 bekannten Art festgeklemmt werden, da die Profilstäbe hierfür keine ausreichende Stabilität besitzen.

In der EP 1 441 081 A2 ist ein Verbinder für offene Profilstäbe offenbart, der zwei einander gegenüberliegende Platten aufweist, die über eine Schraube und ein Zwischenstück miteinander verbunden und klemmend an einem offenen Profilstab festlegbar sind. Hierzu sind an äußeren Kanten der Platten Vorsprünge ausgebildet, die in Eingriff mit an dem Profilstab vorgesehenen Nuten bringbar sind. An dem Zwischenstück ist zwischen den äußeren Kanten der Platten mindestens ein hervorstehender Abstandshalter angeordnet, der zur Abstützung des Profilstabes zwischen zwei gegenüberliegenden Wandabschnitten des Profilstabes einfügbar ist. Der Abstandshalter ist dabei federnd ausgebildet und von einer hervorstehenden Position in eine zurückgezogene Position bewegbar.

Dieser bekannte Verbinder hat sich in der Praxis grundsätzlich bewährt. Es hat sich jedoch gezeigt, dass die funktionssichere Handhabung dieses Verbinders manchen Benutzern schwierig erscheint und insofern eine Unterweisung des Benutzers gegebenenfalls erforderlich wird.

Des Weiteren ist aus der EP 1 780 345 A2 ein gattungsgemäßer Verbinder für rinnenförmige Profilsstäbe beschrieben, bei dem zur Verbesserung der funktionssicheren Handhabung in dem Zwischenstück oder zwischen den Platten und dem Zwischenstück zwei parallel zueinander verlaufende Spalte zur Aufnahme zweier gegenüberliegender Wandabschnitte des rinnenförmigen Profilstabes vorgesehen sind. Dieser Verbinder ist für Profilstäbe bestimmt, die ein anderes Profil aufweisen als die Profilstäbe, für die der aus der EP 1 441 081 A2 bekannte Verbinder bestimmt ist. Der für den Verbinder gemäß der EP 1 780 345 A2 erforderliche Profilstab weist an seiner offen Seite Eckbereiche auf, in denen jeweils eine Nut ausgebildet ist, wobei die Eckbereiche in nach außen vorspringende Stegabschnitte übergehen, die zwischen den Nuten angeordnet sind.

Der vorliegenden Erfindung liegt die Aufgabe zugrunde, einen Verbinder bereitzustellen, der sowohl für offene als auch geschlossene Profilstäbe, insbesondere für Profilstäbe entsprechend dem aus der EP 1 441 081 A2 bekannten offenen Profil geeignet ist, wobei die funktionssichere Handhabung des Verbinders gegenüber dem Stand der Technik verbessert, insbesondere erleichtert sein soll.

Diese Aufgabe wird mit einem Verbindungssystem mit den Merkmalen des Anspruchs 1 gelöst.

Bevorzugte und vorteilhafte Ausgestaltungen des erfindungsgemäßen Verbindungssystems sind in den Unteransprüchen angegeben.

Das erfindungsgemäße Verbindungssystem umfasst einen Verbinder, der zwei einander gegenüberliegende Platten aufweist, die durch mindestens ein Befestigungsmittel und ein Zwischenstück miteinander verbunden sind und klemmend an einem rinnenförmigen Profilstab befestigbar sind. An äußeren Kanten der Platten sind Vorsprünge ausgebildet, die in Eingriff mit an den Profilstäben ausgebildeten Nuten bringbar sind. Zudem umfasst das erfindungsgemäße Verbindungssystem mindestens einen vom Verbinder separat ausgebildeten Abstandshalter zur Anordnung in dem rinnenförmigen Profilstab, an dessen offener Seite der Verbinder klemmend befestigt werden kann, wobei der Abstandshalter mit einer federelastischen Halterung zur form- oder reibschlüssigen Verbindung mit den Innenseiten des Profilstabes versehen ist.

Der Abstandshalter stabilisiert den rinnenförmigen Profilstab, so dass dessen Wandabschnitte, welche seine offene Seite begrenzen, auf Abstand gehalten werden, wenn der Verbinder an der offenen Seite des Profilstabes klemmend befestigt wird. Der Abstandshalter sollte immer dann unterhalb des Verbinders in den Profilstab eingesetzt werden, wenn der Verbinder an der offenen Seite des Profilstabes befestigt wird.

Die federelastische Halterung zur form- oder reibschlüssigen Verbindung des Abstandshalters mit dem Profilstab ist aus mindestens zwei federelastischen Schenkeln gebildet. Diese erfindungsgemäße Ausgestaltung ermöglicht ein einfaches und schnelles Einsetzen des Abstandshalters in den Profilstab. Die Montage des Abstandshalters erfordert kein Werkzeug. Der Abstandshalter besitzt durch die federelastischen Schenkel selbsthaltende Eigenschaften und lässt sich innerhalb des Profilstabes entlang dessen Längsachse verschieben.

Die federelastische Halterung bzw. die federelastischen Schenkel können in unterschiedlichen Formen realisiert werden. Eine erste vorteilhafte Ausgestaltung besteht darin, dass die federelastische Halterung nach Art eines Spreizclips ausgebildet ist. Die Schenkel verlaufen in diesem Fall gespreizt zueinander und definieren einen Spreizungswinkel, der im nicht-montierten Zustand in einem Bereich von 20° bis 70°, insbesondere im Bereich von 35° bis 55° liegt.

Eine zweite vorteilhafte Ausgestaltung besteht darin, dass die federelastische Halterung nach Art eines Federclips ausgebildet ist. Die Schenkel weisen in diesem Fall aufeinander zulaufende Enden auf, wobei der Abstand der Außenseiten der Schenkel an den Enden kleiner/gleich dem Abstand von seitlichen Anschlagflächen des Abstandshalters ist, welche im montierten Zustand des Abstandshalters den die offene Seite des Profilstabes begrenzenden Wandabschnitten des Profilstabes zugewandt sind.

Nach einer weiteren vorteilhaften Ausgestaltung des erfindungsgemäßen Verbindungssystems weist der jeweilige Schenkel einen gegenüber dem Abstandshalter nach außen vorstehenden Abschnitt auf, der im montierten Zustand des Abstandshalters den die offene Seite des Profilstabes begrenzenden Wandabschnitt des Profilstabes untergreift. Diese Ausgestaltung erleichtert die funktionsgerechte Positionierung des Abstandshalters in dem jeweiligen Profilstab. Es genügt hierfür, wenn der den besagten Wandabschnitt des Profilstabes untergreifende Abschnitt des Schenkels gegenüber dem Abstandshalter um einen relativ geringen Betrag nach außen vorsteht, beispielsweise um einen Betrag im Bereich von 1 mm bis 2 mm.

Eine weitere vorteilhafte Ausgestaltung des erfindungsgemäßen Verbindungssystems sieht vor, dass der Abstandshalter einen plattenförmigen Körper aufweist, der an seiner dem Profilstab abgewandten Außenseite mit einem Zapfen versehen ist, wobei in der Stirnfläche des Zwischenstücks des Verbinders, welche an eine geschlossene Außerseite eines Profilstabes anlegbar ist, eine den Zapfen aufnehmende Ausnehmung ausgebildet ist. Der Zapfen und die ihm zugeordnete Ausnehmung dienen als Positionierhilfe. Die Montage des Verbindungssystems wird hierdurch erleichtert. Der Zapfen und die ihm zugeordnete Ausnehmung sind dabei vorzugsweise so ausgebildet, dass sie eine Rastverbindung darstellen.

Der Abstandshalter und dessen federelastische Halterung lassen sich vorteilhaft als einstückiges Kunststoff-Spritzgießteil herstellen.

Nachfolgend wird die Erfindung anhand einer mehrere Ausführungsbeispiele darstellenden Zeichnung näher erläutert. Es zeigen:
- Fig. 1: eine perspektivische Ansicht eines erfindungs- gemäßen Verbindungssystems gemäß einem ersten Ausführungsbeispiel im montierten Zustand;
- Fig. 2: das Verbindungssystem der Fig. 1 in Vorder- ansicht;
- Fig. 3: das Verbindungssystem der Fig. 1 in Draufsicht;
- Fig. 4: das Verbindungssystem der Fig. 1 in Seiten- ansicht;
- Fig. 5: eine Schnittansicht des Verbindungssystems in der Schnittebene A-A der Fig. 4;
- Figuren 6 bis 8: der Abstandshalter des Verbindungs- systems der Fig. 4 in Seitenansicht, Vorder- ansicht und Draufsicht;
- Fig. 9: eine perspektivische Darstellung eines weiteren Abstandshalter gemäß einem zweiten Ausführungs- beispiel;
- Figuren 10 und 11: eine Seitenansicht und eine perspektivische Darstellung eines weiteren Abstandshalters gemäß einem dritten Ausführungsbeispiel;
- Fig. 12: ein Verbindungssystem mit dem Abstandshalter der Figuren 10 und 11 in Seitenansicht; und
- Fig. 13: eine Schnittansicht des Verbindungssystems in der Schnittebene A-A der Fig. 12.

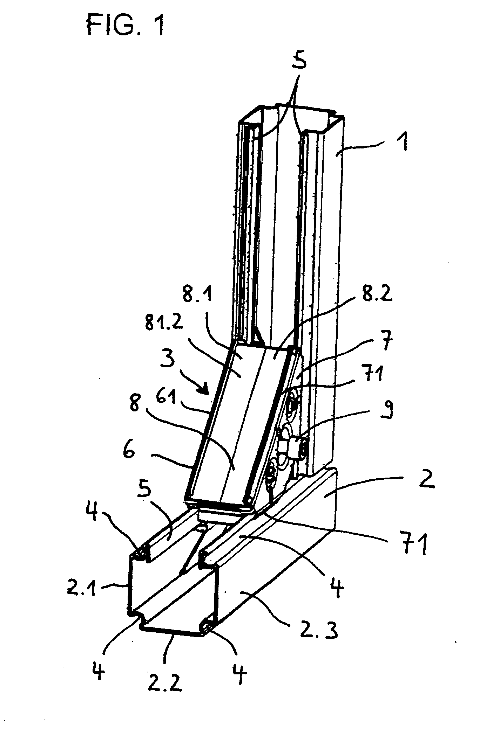

Die Figuren 1 bis 5 zeigen zwei Profilstäbe 1, 2, die rechtwinklig zueinander angeordnet und durch einen Verbinder 3 miteinander verbunden sind. Die Profilstäbe 1, 2 sind jeweils als offener, rinnenförmiger Profilstab ausgebildet. Der Profilstab 2 umfasst drei Seitenwände 2.1, 2.2, 2.3, die im Eckbereich jeweils eine rund ausgebildete Nut 4 besitzen. Er kann auch als C-förmiges Profil bezeichnet werden. An seiner offenen Seite weist der Profilstab 1, 2 in das Profilinnere umgebogene Wandabschnitte 5 auf.

In dem in den Figuren 1 bis 5 dargestellten Beispiel ist der Verbinder 3 an der offenen Seite des jeweiligen Profilstabes 1, 2 montiert. Der Verbinder 3 kann jedoch an allen Seiten des Profilstabes klemmend befestigt werden, also auch an einer der geschlossenen Seitenwände (z.B. 2.1, 2.2 oder 2.3) des Profilstabes. Der Verbinder 3 umfasst zwei einander gegenüberliegende Platten 6, 7 und ein Zwischenstück 8. Die Platten 6, 7 bestehen vorzugsweise aus Metall, beispielsweise aus Zink-Druckguss oder verzinktem Blech, während das Zwischenstück 8 vorzugsweise aus Kunststoff hergestellt ist. Die Platten 6, 7 sind mittels einer Schraube 9 (Innensechskantschraube) verbunden, wobei an der Platte 7 der Kopf der Schraube 9 und an der Platte 6 ein eingepresstes Gewinde oder eine Mutter angeordnet sind.

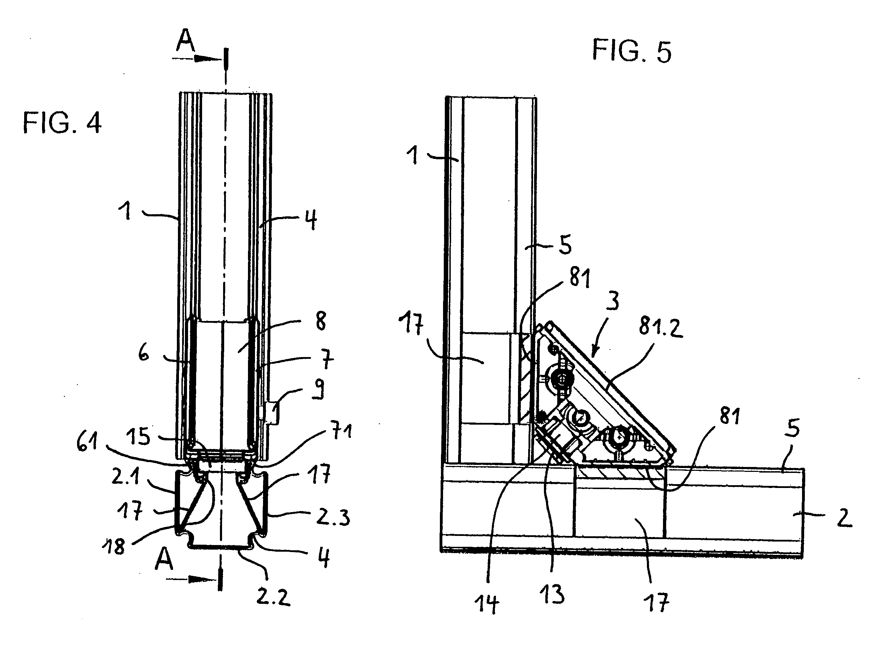

Die an einer geschlossenen Seite des Profilstabes 1, 2 anlegbare Stirnfläche 81, 81.2 des Zwischenstückes 8 ist an einem Abschnitt desselben ausgebildet, der im Wesentlichen biegstarr am Zwischenstück 8 gehalten ist (vgl. Fig. 5). Im Gegensatz zu dem aus der EP 1 441 081 A2 bekannten Verbinder weist das Zwischenstück 8 des Verbinders 3 gemäß der vorliegenden Erfindung keinen federelastisch eindrückbaren Abstandshalter auf. Hierdurch sind die Konstruktion und die Herstellung des erfindungsgemäßen Verbindungssystems vereinfacht, so dass eine Verringerung der Herstellungskosten gegenüber dem bekannten Verbinder erzielt werden kann.

Die Stirnfläche 81, 81.2 ist vorzugsweise als im Wesentlichen ebene Anlagefläche ausgebildet. Das Zwischenstück 8 weist insgesamt drei solcher Stirnflächen auf, und zwar zwei kürzere Stirnflächen 81 und eine längere Stirnfläche 81.2, wobei die beiden kürzeren Stirnflächen (Anlageflächen) 81 im Wesentlichen rechtwinklig zueinander verlaufen, während die längere Stirnfläche (Anlagefläche) 81.2 mit den beiden kürzeren Stirnflächen 81 einen Winkel von jeweils 45° einschließt.

Entsprechend den drei im Wesentlichen ebenen Stirnflächen 81, 81.2 des Zwischenstücks 8 weisen die Platten 6, 7 des Verbinders 3 jeweils drei geradlinige äußere Kanten auf, von denen zwei rechtwinklig zueinander verlaufen und die dritte Kante mit einer der beiden anderen Kanten jeweils einen Winkel von etwa 45° einschließt. An diesen Kanten ist jeweils ein Vorsprung 61, 71 ausgebildet. Zur Verbindung zweier Profilstäbe 1, 2 greifen zumindest zwei dieser Vorsprünge 61, 71 in die Nuten 4 der Profilstäbe 1, 2 ein und legen den Verbinder 3 somit an den Profilstäben 1, 2 klemmend fest. Mit dem Verbinder 3 lassen sich somit Profilstäbe 1, 2 in Winkeln von 45° und 90° miteinander verbinden.

Das Zwischenstück 8 des Verbinders 2 ist vorzugsweise zweiteilig ausgebildet und umfasst eine erste Hälfte 8.1 und eine zweite Hälfte 8.2, die ineinander steckbar sind. Hierfür sind an einer Seite der Hälfte 8.1 Zapfen ausgebildet, die in gegenüberliegende Öffnungen der anderen Hälfte 8.2 eingreifen. An der anderen Hälfte 8.2 sind gleiche Zapfen ausgebildet, die dann in zugeordnete Öffnungen an der ersten Hälfte 8.1 eingreifen. Die beiden Hälften 8.1, 8.2 des Zwischenstücks 8 sind baugleich ausgebildet und können somit mit dem gleichen Formwerkzeug hergestellt werden.

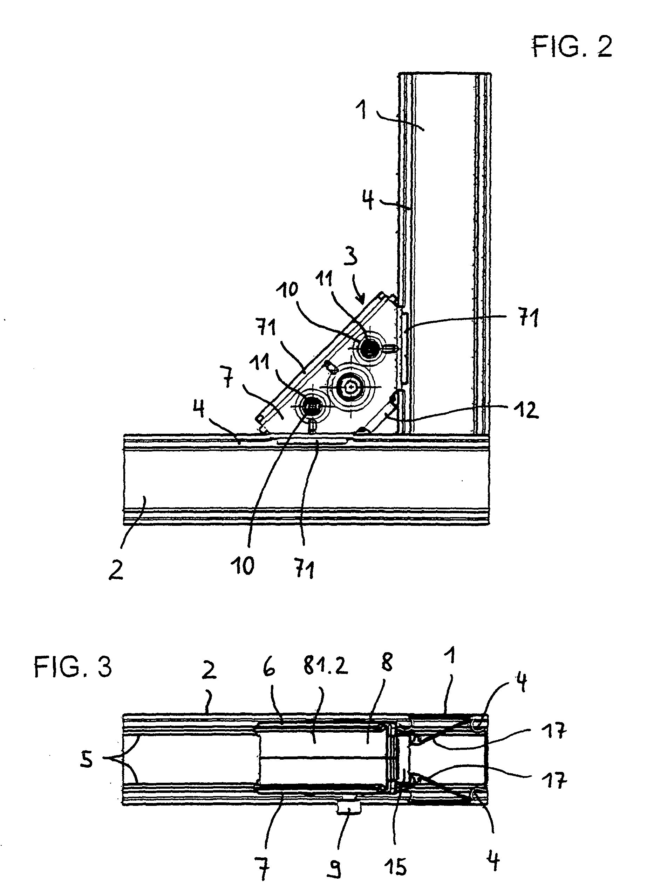

An den Platten 6, 7 sind Öffnungen 10 vorgesehen, in die Rastmittel zur Vorfixierung der Platten 6, 7 an dem Zwischenstück 8 einfügbar sind. Dabei sind an der zur Platte 6 bzw. 7 gewandten Seite des Zwischenstücks 8 Zapfen 11 ausgebildet, die einen verdickten Endabschnitt aufweisen (Fig. 2). In dem verdickten Endabschnitt ist ein Schlitz ausgebildet, so dass der verdickte Endabschnitt elastisch zusammengedrückt und in die Öffnung 11 der Platte 6, 7 eingefügt werden kann. Der verdickte Endabschnitt rastet dabei derart an der Öffnung 11 ein, dass die Platte 6 bzw. 7 vorfixiert an dem Zwischenstück 8 gehalten ist.

Ferner ist an einem oberen Abschnitt der Platten 6, 7 jeweils ein rechwinklig abgewinkelter Flansch 12 vorhanden, der mit einer Öffnung 13 versehen ist. Hierdurch ergibt sich eine weitere Befestigungsmöglichkeit an dem Verbinder 3. Hierzu kann beispielsweise eine Mutter 14 in den Verbinder 3 eingelegt werden und eine passende Schraube (nicht gezeigt) durch die Öffnung 13 in die Mutter 14 eingedreht werden (Figuren 2 und 5).

Neben dem Verbinder 3 umfasst das erfindungsgemäße Verbindungssystem separate Abstandshalter 15 zur Anordnung in dem jeweiligen rinnenförmigen Profilstab 1, 2, an dessen offener Seite der Verbinder 3 klemmend befestigt ist. Der Abstandshalter 15 sorgt für eine Stabilisierung der sich gegenüberliegenden Seitenwände 5 des offenen Profils und verhindert eine übermäßige Deformierung des Profils in dem Bereich der Verbindung. Der Abstandshalter 15 ist im Wesentlichen plattenförmig und rechteckig ausgebildet. Er weist seitliche, parallel zueinander verlaufende Anschlagflächen (Anlageflächen) 16 auf, an denen die nach innen gebogenen Wandabschnitte 5 des offenen Profils nach Festziehen der Schraube 9 des Verbinders 3 anliegen.

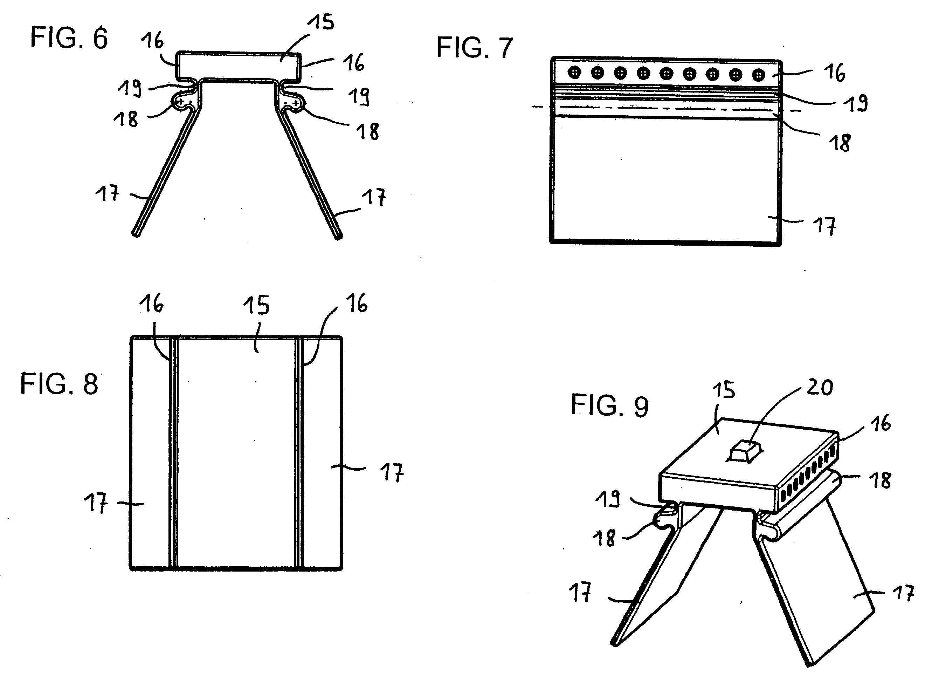

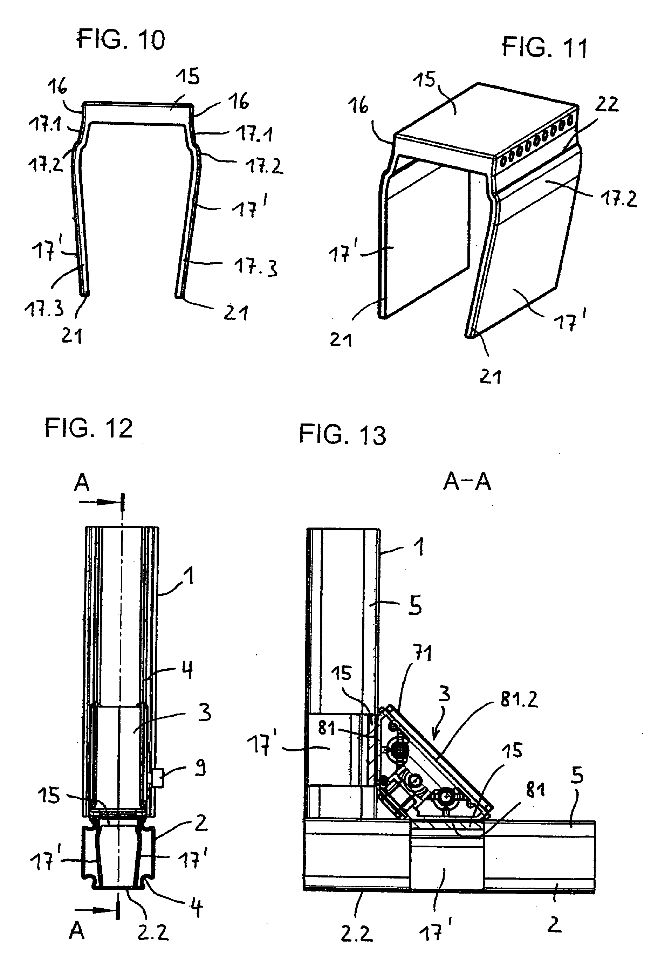

An dem Abstandshalter 15 ist eine federelastische Halterung einstückig angeformt, mittels der der Abstandshalter selbsthaltend mit den Innenseiten des Profilstabes 1 bzw. 2 verbunden werden kann. Die federelastische Halterung ist aus zwei Schenkeln 17, 17' gebildet, die federelastisch aufeinander zu bewegt werden können. Die Breite der Schenkel 17, 17' entspricht der Länge des plattenförmigen Abstandshalters 15 (vgl. Figuren 9 und 11).

Die Schenkel 17 sind gespreizt zueinander ausgebildet. Sie definieren in dem in den Fig. 6 dargestellten Ausführungsbeispiel einen Spreizungswinkel von ca. 47°. Der jeweilige Schenkel 17 weist einen gegenüber dem Abstandshalter 15 nach außen vorstehenden Abschnitt 18 auf, der im montierten Zustand des Abstandshalters 15 den die offene Seite des Profilstabes begrenzenden Wandabschnitt 5 des Profilstabes untergreift (vgl. Figuren 4 und 6).

Der Abschnitt 18 des Schenkels 17 ist rippenförmig ausgebildet. Er steht gegenüber dem Abstandshalter 15 etwa um 1 bis 3 mm seitlich vor und weist eine abgerundete Kante auf. Zwischen dem Abstandshalter 15 und dem nach außen vorstehenden Abschnitt 18 des Schenkels 17 ist eine Nut 19 ausgebildet. Die seitliche Anlagefläche 16 des Abstandshalters 15 und der rippenförmige Abschnitt 18 des Schenkels 17 verlaufen parallel zueinander. Die Länge der Schenkel 17 ist so bemessen, dass sie in der Montagestellung des Abstandshalters 15 im Bereich der Innenkehlen enden, welche durch die geschlossenen, parallel zueinander verlaufenden Seitenwände 2.1, 2.3 und die Längsnuten 4 des Profils definiert sind.

Wie in Fig. 9 gezeigt, kann der plattenförmige Körper des Abstandhalters 15 an seiner dem Profilstab abgewandten Außenseite optional mit einem Zapfen 20 versehen sein, der als Positionierhilfe für den Verbinder 3 dient. Die Stirnflächen 81, 81.2 des Zwischenstücks 8, welche an eine geschlossene Seitenwand eines Profilstabes angelegt werden können, weisen in diesem Fall eine den Zapfen 20 aufnehmende Ausnehmung (nicht gezeigt) auf.

In den Figuren 10 bis 13 ist ein weiteres Ausführungsbeispiel eines erfindungsgemäßen Verbindungssystems gezeigt. Der Verbinder 3 dieses Systems entspricht dem Verbinder des in den Figuren 1 bis 5 dargestellten Verbindungssystems. Die Schenkel 17' des Abstandshalters 15 sind jedoch anders gestaltet. Zunächst ist der Abstandshalter 15 wiederum separat zu dem Verbinder 3 ausgebildet und mit einer federelastischen Halterung zur form- oder reibschlüssigen Verbindung des Abstandshalters 15 mit den Innenseiten des Profilstabes 1 bzw. 2 versehen.

Die federelastische Halterung ist aus zwei federelastischen Schenkeln 17' gebildet, die aufeinander zulaufende Enden 21 aufweisen. In Fig. 10 ist zu erkennen, dass der Abstand der Außenseiten der Schenkel 17' an den Enden 21 kleiner als der Abstand der seitlichen Anschlagflächen (Anlageflächen) 16 des plattenförmigen Abstandshalters 15 ist, welche im montierten Zustand des Abstandshalters den nach innen gebogenen Wandabschnitten 5 des Profilstabes 1 bzw. 2 zugewandt sind.

In den Figuren 10 und 12 ist ferner zu erkennen, dass jeder der beiden Schenkel 17' einen nach außen gebogenen, gegenüber dem Abstandshalter 15 vorstehenden Abschnitt aufweist, der im montierten Zustand des Abstandshalters 15 den Wandabschnitt 5 des Profilstabes 1 bzw. 2 untergreift. Die an dem Abstandshalter 15 angeformten Schenkel 17' beginnen mit leicht nach außen gespreizten Abschnitten 17.1 an der Unterseite des Abstandshalters 15. Ihre Außenseite schließt bündig an die Anlagefläche 16 des Abstandshalters 15 an. Sie gehen dann jeweils in einen bogenförmigen Abschnitt 17.2 über, so dass sich ihr Abstand zueinander weiter vergrößert. Der bogenförmige Abschnitt 17.2 beginnt an einer geradlinigen Kehle 22 an der Außenseite des jeweiligen Schenkels 17'. Der abgerundete, bogenförmige Abschnitt 17.2 geht schließlich in einen geradlinigen Schenkelabschnitt 17.3 über. Die geradlinigen Schenkelabschnitte 17.3 konvergieren zueinander. Die Länge der Schenkel 17' ist so bemessen, dass sie in der Montagestellung des Abstandshalters 15 zwischen den Innenkehlen enden, welche durch die Längsnuten 4 des Profils und die der offenen Profilseite gegenüberliegende Profilwand 2.2 definiert sind.

Der Verbinder 3 und der clipartig in den Profilstab 1, 2 einsetzbare Abstandshalter 15 des erfindungsgemäßen Verbindungssystems lassen sich relativ kostengünstig herstellen. Das erfindungsgemäße Verbindungssystem zeichnet sich durch eine einfache Montage aus und bietet eine besonders sichere Verbindung.

## Patentansprüche

1. Verbindungssystem für rinnenförmige Profilstäbe (1, 2), insbesondere zur Bildung von Sanitärinstallationen, mit einem Verbinder (3), der zwei einander gegenüberliegende Platten (6, 7) aufweist, die durch mindestens ein Befestigungsmittel (9) und ein Zwischenstück (8) miteinander verbunden sind und klemmend an einem rinnenförmigen Profilstab (1, 2) befestigbar sind, wobei an äußeren Kanten der Platten Vorsprünge (61, 71) ausgebildet sind, die in Eingriff mit an den Profilstäben (1, 2) ausgebildeten Nuten (4) bringbar sind, und mit mindestens einem Abstandshalter (15) zur Anordnung in dem jeweiligen rinnenförmigen Profilstab (1,2), an dessen offener Seite der Verbinder (3) klemmend befestigt werden kann,
**dadurch gekennzeichnet, dass** der mindestens eine Abstandshalter (15) ein von dem Verbinder separat ausgebildeter Abstandshalter (15) ist, der mit einer federelastischen Halterung zur form- oder reibschlüssigen Verbindung mit den Innenseiten des Profilstabes (1, 2) versehen ist, wobei die federelastische Halterung aus mindestens zwei federelastischen Schenkeln (17, 17') gebildet ist.

2. Verbindungssystem nach Anspruch 1,
**dadurch gekennzeichnet, dass** die Schenkel (17) der federelastischen Halterung gespreizt zueinander verlaufen und einen Spreizungswinkel im Bereich von 20° bis 70° definieren.

3. Verbindungssystem nach Anspruch 1,
**dadurch gekennzeichnet, dass** die Schenkel (17') der federelastischen Halterung aufeinander zulaufende Enden (21) aufweisen, wobei der Abstand der Außenseiten der Schenkel (17') an den Enden (21) kleiner/gleich dem Abstand von seitlichen Anschlagflächen (16) des Abstandshalters (15) ist, welche im montierten Zustand des Abstandshalters (15) den die offene Seite des Profilstabes (1, 2) begrenzenden Wandabschnitten (5) des Profilstabes zugewandt sind.

4. Verbindungssystem nach einem der Ansprüche 1 bis 3, **dadurch gekennzeichnet, dass** der jeweilige Schenkel (17) der federelastischen Halterung einen gegenüber dem Abstandshalter nach außen vorstehenden Abschnitt (18, 17.2) aufweist, der im montierten Zustand des Abstandshalters (15) einen die offene Seite des Profilstabes (1, 2) begrenzenden Wandabschnitt (5) des Profilstabes untergreift.

5. Verbindungssystem nach Anspruch 4,
**dadurch gekennzeichnet, dass** der nach außen vorstehende Abschnitt (17.2) des jeweiligen Schenkels (17, 17') ein abgerundetes Ende aufweist.

6. Verbindungssystem nach Anspruch 4 oder 5,
**dadurch gekennzeichnet, dass** der nach außen vorstehende Abschnitt (18) des jeweiligen Schenkels (17) rippenförmig ausgebildet ist und eine abgerundete Kante aufweist.

7. Verbindungssystem nach einem der Ansprüche 4 bis 6,
**dadurch gekennzeichnet, dass** zwischen dem Abstandshalter (15) und dem nach außen vorstehenden Abschnitt (18) des jeweiligen Schenkels eine Nut (19) ausgebildet ist.

8. Verbindungssystem nach einem der Ansprüche 1 bis 7,
**dadurch gekennzeichnet, dass** eine an eine Außerseite zumindest eines der Profilstäbe (1, 2) anlegbare Stirnfläche (81, 81.2) des Zwischenstückes (8) an einem Abschnitt desselben ausgebildet ist, der im Wesentlichen biegestarr am Zwischenstück (8) gehalten ist.

9. Verbindungssystem nach einem der Ansprüche 1 bis 8,
**dadurch gekennzeichnet, dass** der Abstandshalter (15) einen plattenförmigen Körper aufweist, der an seiner dem Profilstab (1, 2) abgewandten Außenseite mit einem Zapfen (20) versehen ist, wobei in der Stirnfläche (81, 81.2) des Zwischenstückes (8), welche an einer geschlossenen Außerseite (2.1, 2.2, 2.3) eines Profilstabes (1, 2) anlegbar ist, eine den Zapfen (20) aufnehmende Ausnehmung ausgebildet ist.

10. Verbindungsanordnung mit mindestens zwei Profilstäben, die über ein Verbindungssystem (3, 15) nach einem der Ansprüche 1 bis 9 miteinander verbunden sind,
**dadurch gekennzeichnet, dass** mindestens einer der Profilstäbe (1, 2) ein rinnenförmig ausgebildeter Profilstab ist, der an seiner offenen Seite in das Profilinnere umgebogene Wandabschnitte (5) aufweist.

## Claims

1. Connection system for trough-shaped profiled bars (1, 2), in particular for building sanitary installations, comprising a connector (3) which has two opposing plates (6, 7) which are interconnected by at least one fastening means (9) and an intermediate piece (8) and can be fastened to a trough-shaped profiled bar (1, 2) in a clamping manner, projections (61, 71) being formed on outer edges of the plates, it being possible to bring said projections into engagement with grooves (4) formed on the profiled bars (1, 2), and comprising at least one spacer (15) to be arranged in the respective trough-shaped profiled bar (1, 2), to the open side of which the connector (3) can be fastened in a clamping manner, **characterised in that** the at least one spacer (15) is a spacer (15) which is formed separately from the connector and is provided with a resilient holder for a positive or friction connection to the inner faces of the profiled bar (1, 2), the resilient holder being formed from at least two resilient limbs (17, 17').

2. Connection system according to claim 1, **characterised in that** the limbs (17) of the resilient holder extend so as to spread apart from one another and define a spread angle in the range of from 20° to 70°.

3. Connection system according to claim 1, **characterised in that** the limbs (17') of the resilient holder have converging ends (21), the spacing of the outer faces of the limbs (17') at the ends (21) being less than/equal to the spacing of lateral stop faces (16) of the spacer (15), which face the wall portions (5) of the profiled bar, which wall portions delimit the open side of the profiled bar (1, 2), when the spacer (15) is mounted.

4. Connection system according to any of claims 1 to 3, **characterised in that** the respective limb (17) of the resilient holder has a portion (18, 17.2) which projects outwards relative to the spacer and engages under a wall portion (5) of the profiled bar, which wall portion delimits the open side of the profiled bar (1, 2), when the spacer (15) is mounted.

5. Connection system according to claim 4, **characterised in that** the outwardly projecting portion (17.2) of each limb (17, 17') has a rounded end.

6. Connecting system according to either claim 4 or claim 5, **characterised in that** the outwardly projecting portion (18) of the respective limb (17) is rib-shaped and has a rounded edge.

7. Connection system according to any of claims 4 to 6, **characterised in that** a groove (19) is formed between the spacer (15) and the outwardly projecting portion (18) of the respective limb.

8. Connection system according to any of claims 1 to 7, **characterised in that** an end face (81, 81.2) of the intermediate piece (8) can be positioned on an outer face of at least one of the profiled bars (1, 2) and is formed on a portion of said intermediate piece which is held on the intermediate piece (8) in a manner substantially resistant to bending.

9. Connection system according to any of claims 1 to 8, **characterised in that** the spacer (15) has a plate-shaped body which is provided, at the outer face thereof facing away from the profiled bar (1, 2), with a pin (20), a recess which receives the pin (20) being formed in the end face (81, 81.2) of the intermediate piece (8) which can be positioned on a closed outer face (2.1, 2.2, 2.3) of a profiled bar (1, 2).

10. Connection arrangement comprising at least two profiled bars, which are interconnected via a connection system (3, 15) according to any of claims 1 to 9, **characterised in that** at least one of the profiled bars (1, 2) is a trough-shaped profiled bar and, on the open side thereof, has wall portions (5) which are bent into the profiled interior.

## Revendications

1. Système de connexion pour barres profilées en forme de rigoles (1, 2), en particulier pour la formation d'installations sanitaires, avec un connecteur (3) qui présente deux plaques opposées (6, 7) qui sont reliées entre elles par au moins un moyen de fixation (9) et une pièce intercalaire (8) et peuvent être fixées par serrage à une barre profilée en forme de rigole (1, 2), des saillies (61, 71) étant formées sur les bords externes des plaques, lesquelles peuvent s'engager avec des rainures (4) formées sur les barres profilées (1, 2), et avec au moins un écarteur (15) pour la disposition dans la barre profilée respective en forme de rigole (1, 2) sur la face ouverte de laquelle le connecteur (3) peut être fixé par serrage,
**caractérisé en ce que** l'au moins un écarteur (15) est un écarteur (15) réalisé séparément du connecteur, lequel est muni d'une fixation élastique pour une connexion par friction ou adhérence des formes aux faces internes de la barre profilée (1, 2), la fixation élastique étant formée d'au moins deux branches élastiques (17, 17').

2. Système de connexion selon la revendication 1, **caractérisé en ce que** les branches (17) de la fixation élastique s'étendent en s'écartant les unes des autres et définissent un angle d'écartement compris entre 20° et 70°.

3. Système de connexion selon la revendication 1, **caractérisé en ce que** les branches (17') de la fixation élastique présentent des extrémités (21) se rejoignant, la distance des faces externes des branches (17') étant inférieure ou égale à la distance de surfaces de butée latérales (16) de l'écarteur (15), lesquelles sont tournées à l'état monté de l'écarteur (15) vers les sections de paroi (5) délimitant la face ouverte de la barre profilée (1, 2).

4. Système de connexion selon l'une des revendications 1 à 3, **caractérisé en ce que** la branche respective (17) de la fixation élastique présente une section (18, 17.2) faisant saillie vers l'avant par rapport à l'écarteur, section qui, à l'état monté, de l'écarteur (15) agrippe par le bas une section de paroi (5) de la barre profilée, section qui délimite la face ouverte de la barre profilée (1, 2).

5. Système de connexion selon la revendication 4, **caractérisé en ce que** la section (17.2) faisant saillie vers l'extérieur de la branche respective (17, 17') présente une extrémité arrondie.

6. Système de connexion selon la revendication 4 ou 5, **caractérisé en ce que** la section (18) faisant saillie vers l'extérieur de la branche respective (17) est réalisée en forme de nervure et présente un bord arrondi.

7. Système de connexion selon l'une des revendications 4 à 6, **caractérisé en ce qu'**une rainure (19) est formée entre l'écarteur (15) et la section (18) faisant saillie vers l'extérieur de la branche respective.

8. Système de connexion selon l'une des revendications 1 à 7, **caractérisé en ce qu'**une surface frontale (81, 81.2) de la pièce intercalaire (8), surface qui est applicable contre une face externe d'au moins l'une des barres profilées (1, 2), est formée sur une section de la pièce intercalaire, section qui est maintenue contre la pièce intercalaire (8) sensiblement de manière rigide à la flexion.

9. Système de connexion selon l'une des revendications 1 à 8, **caractérisé en ce que** l'écarteur (15) présente un corps en forme de plaque qui est muni sur sa face externe opposée à la barre profilée (1, 2) d'un tenon (20), un évidement logeant le tenon (20) étant formé dans la surface frontale (81, 81.2) de la pièce intercalaire (8), qui peut être appliquée contre une face externe fermée (2.1, 2.2, 2.3) d'une barre profilée (1, 2).

10. Arrangement de connexion avec au moins deux barres profilées qui sont reliées entre elles par un système de connexion (3, 15) selon l'une des revendications 1 à 9, **caractérisé en ce qu'**au moins l'une des barres profilées (1, 2) est une barre profilée réalisée en forme de rigole qui présente sur sa face ouverte des sections de paroi (5) recourbées vers l'intérieur du profilé.
